# EUROPEAN PATENT APPLICATION

(11) **EP 2 174 978 A1**
(43) Date of publication of application: **14.04.2010**
(21) Application number: 08156738.0
(22) Date of filing: 22.05.2008
(51) Int. Cl.: C08K 3/34, C08K 3/38, C08K 7/14, C08K 9/04, C08K 13/04, A41D 31/00, A41D 13/015

(54) **Damage tolerant composite material**

(71) Applicant: Technische Universiteit Delft, 2628 CN Delft (NL)
(72) Inventor: The designation of the inventor has not yet been filed
(74) Representative: Hatzmann, Martin

(57) **Abstract**

The invention is directed to a damage tolerant composite comprising:
- at least one reversible supramolecular polymer,
- fibre reinforcement, and
- nanoparticles having an aspect ratio of at least 10.

## Description

The present invention is directed to damage tolerant composite materials, more in particular to materials having a deformation or shear rate depending stiffness.

Today's protective clothing consists mostly of hard shell protection. Shin, elbow, wrist and knee pads still have these hard shells which are very uncomfortable because they restrict the movement of the joints they are used for. Although body armour is usually not made with hard shells, it is made of multi-layered fabrics resulting in inflexible and heavy armour. Due to this discomfort people do not always wear the protection they need, resulting in potential injuries or casualties.

Composite materials usually consist of fibre reinforced plastics, fibre fabric or short fibers impregnated with matrix material. The properties of a composite come from the high strength fibres. Usually the matrix material is a thermosetting or thermoplastic polymer based material which is rigid.

Previously, it has been tried to make good use of shear thickening fluids in flexible protective clothing. One example is d3o which is a material with intelligent molecules and behaves much like a shear thickening fluid. D3o is already used for protective clothing in shoes, hats, gloves, and elbow, shin and knee pads.

The general idea of a shear thickening fluid (STF) is a fluid in which (small) solid particles are dispersed. When deformation rates are low the particles slide over each other, but when the deformation rate is high enough the particles jam together causing a sudden increase in viscosity and stiffness. When the stress is released the particles rearrange in the fluid and the viscosity decreases again. Most literature give a volume fraction for the particles about 40 % to 60 %. The critical shear rate is determined by the lowest shear rate in a shear thickening fluid to cause shear thickening. The critical shear rate is, among others, determined by particle size, concentration and shape. Kevlar fabrics impregnated with shear thickening fluid of silica particles suspended in ethylene glycol have been used to produce thinner and therefore more flexible and comfortable body armour. Under impact the silica particles jam together and the armour becomes stiff to provide protection. The properties of this material show that the STF-composite is capable of stopping ballistic impacts and the addition of shear thickening fluid increases the energy absorption.

One of the disadvantages of the known materials is the rather low viscosity of the fluid in the STF which may leach out of the protective part.

It is an object of the present invention to provide for a damage tolerant composite, which means that the material is able to resist multiple damages, without failing, and preferably also that the material has self healing properties.

The invention is **characterized in that** the composite material comprises:
- at least one reversible supramolecular polymer,
- fibre reinforcement, and
- nanoparticles having an aspect ratio of at least 10.

More in particular the material of the invention has the following composition:
25 to 74 wt.% of the reversible supramolecular polymer,
25 to 70 wt.% of the fibre reinforcement,
1 to 15 wt.% of the said nanoparticles and further conventional additives, preferably
35 to 55 wt.% of the reversible supramolecular polymer,
25 to 60 wt.% of the fibre reinforcement,
2 to 10 wt.% of the said nanoparticles, and
0.2 to 7.5 wt. % of surfactant.

The material of the invention comprises three essential components, namely the reversible supramolecular polymer, the fibre reinforcement and the specific nano-particles.

A reversible supramolecular polymer is defined as a material with properties that depend on the presence of reversible supramolecular interactions. Specific examples thereof are (1) metal-hydroxide modified siloxane, preferably polydimethyl siloxane (PDMS), such as boric-acid modified PDMS, (2) reversible metal ligand based supramolecular polymers, and (3) reversible hydrogen bond based supramolecular polymers. The first group of compounds is described in US patent 2,541,851, whereas the second group is U.S. Schubert, C. Eschbaumer, C.H. Weidl, Design of supramolecular metal complexing polymers: synthesis, complexation and polymerization of 5,5"-bisfunctionalized terpyridine building blocks, Des. Monomers Polym., 2(3), 185-189, (1999) and the third group in Sijbesma RP, Beijer FH, Brunsveld L, Folmer BJB, Hirschberg JHKK, Lange RFM, Lowe JKL, Meijer EW, SCIENCE 1997, 278 (5343), 1601-1604.

The fibre reinforcement can be based on natural or synthetic fibres. Preferred fibres are glass fibres, which may be in any suitable form, such as loose fibres, non-wovens, woven fibres, knitted structures and the like. It can also be based on laminates, i.e. two or more layers of such fibres. In addition the fibres can be aramid fibres, carbon fibres, high-performance polyethylene fibres, and others known to those skilled in the art.

The specific nanoparticles are preferably based on clay materials, nanotubes or nanofibres. It is essential that the particles have an aspect ratio of at least 10, preferably at least 20 and more preferred between 100 and 2500. The use of this aspect ratio allows for a much lower loading of fillers, while obtaining the same or better properties. The nanoparticles have sizes in the nanometer range, which means that the smallest size is in the range of about 1 nm to about 10 nm, whereas that largest particle dimension is typically in the range of 0.1 - 1 micron.

Preferred are plate type materials, more in particular clay materials. Nanoclay materials or minerals are solid substances, substantially made up of metal and oxygen atoms, whose crystal lattice has a layered structure. This layered structure consists of three repeating layers. Located centrally in this elementary three-layer structure is a layer of substantially trivalent or substantially divalent metal ions (cations). Examples of clay minerals with substantially trivalent ions are montmorillonite and beidellite; examples of clay minerals with substantially divalent ions are hectorite and saponite. The metal ions present in the central layer are octahedrally surrounded by oxygen and hydroxyl ions. In a clay mineral with trivalent ions, two of the three octahedron positions are occupied by metal ions. Accordingly, this is referred to as a di-octahedral clay mineral. In a clay mineral with divalent metal ions, all three octahedron positions are occupied by metal ions; this is referred to as a tri-octahedral clay mineral. On opposite sides of this layer of octahedrally surrounded metal ions occurs a layer of tetrahedrally surrounded ions. These tetrahedrally surrounded ions are generally silicon ions, while a part of the silicon can optionally be replaced by germanium, aluminium, boron and the like.

Nanoclay particles consist of a layered structure and for effective particle reinforcement the layers need to be split from each other, i.e. exfoliated and dispersed in the matrix material. Between the normal stacked immiscible state and the complete exfoliated state, there is the intercalated state. In the intercalated state the layered structure still exists but the distance between the layers is larger. In reality the particles are usually not completely exfoliated and most materials display a combination of dispersion states.

Different kinds of fillers have been used to improve the mechanical properties of polymers. Generally fillers increase the modulus, but also the viscosity. Nanoclay particles are used because they are more efficient than micro sized fillers, although they require an additional process of exfoliating. This is due to the high aspect ratio of platelet shaped nano fillers. For instance the same increase of modulus can be reached with 5% nano filler as with 40% micro filler. As the amount of additives can be kept low, other properties are less affected than using the micro fillers.

The particles are preferably organophilic, or have an organophilic treatment of the surface thereof. There may for example be a fluorine treatment or by using quaternary ammonium based surfactants.

The invention has the surprising properties of very good damage resistance, which means that the material can resist multiple impacts before failure, whereas the material also has self healing properties, which means that after an impact the material resumes its previous equilibrium configuration.

The product of the present invention is based on reversible supramolecular polymers, namely materials having a network that is in dynamic equilibrium between on the one hand the monomers of the system and on the other hand the polymeric situation. Reversible supramolecular polymers can also consist of standard linear or branched polymers or oligomers with functional end groups that form a reversible supramolecular physical network. In combination with the other components this equilibrium provides for the specific properties of the composite material.

Preferred reversible supramolecular polymers are based on boric-acid modified siloxanes, more in particular dialkyl siloxanes such as poly dimethyl siloxane.

The boric-acid modification is usually done by heating boric acid and the siloxane for some time, for example at a temperature between 150 and 250°C.

The polymeric material has a dynamic equilibrium reversible bonding of the end groups which leads to the formation of a dynamic physical network, which results in highly elastic behaviour especially at high deformation rates. In addition to this it may also be useful to provide for some chemical crosslinking of the molecular units, in order to modify the properties of the composite, for example to make it more resilient.

The composite may further contain additional components. Examples thereof are surfactants, other fillers, rubbery materials and the like. The amounts thereof depend on the required effects of the specific materials and may each be up to about 5 wt.% of the total composite. Surfactants can be used to improve adhesion, whereas fillers and rubbery materials are added to modify the mechanical properties. Examples of these additives are well known from conventional formulation of engineering polymers to those skilled in the art, such as talcum, calcium carbonate, silica, carbon black, rubber etc.

The composite materials of the invention can be prepared in any suitable manner. Generally, the fibre reinforcement is impregnated with the reversible supramolecular polymer, which already contains the other additives. It is possible to simply press the material into the fibres, optionally with increased temperature, but it is preferred to dissolve to the materials in a suitable solvent, preferably an aprotic solvent, such as alcohols and ethers and impregnate the fibre with the solution, followed by evaporating the solvent. In case short fibres are used as reinforcement, an alternative method can be that the fibres are directly mixed into the polymer/nanoparticles blend, followed by casting or pressing into a suitable shape.

The shape of the composite material is preferably layer-like, either as a single layer or in the form of a laminate. Such a laminate may consist of two or more layers depending on the specific application of the composite material.

Suitable uses of the composite material of the present invention are found in the area where the properties of the material, damage resistance and self healing properties, are the most useful. Specific examples thereof are in protective materials for sports or building activities, for personal protection of civil servants, such as police or firemen, and for ballistic protection and armour.

The invention is now elucidated on the basis of some examples, which are not intended as limiting the invention.

### EXAMPLES

Three samples were prepared on the basis of a glass fabric, a surfactant coated, partially exfoliated montmorrillonite (MM) and a boric acid modified polydimethyl siloxane (B-PDMS).

The montmorrillonite had a mica structure with a thickness of about 1 nm and an aspect ratio (largest size of the plates) of about 150.

The composition in wt.% of the three samples is given in the table:

| Material | MM | Glass fabric | B-PDMS |
|---|---|---|---|
| | | | |
| Sample 1 | 0 | 57 | 43 |
| Sample 2 | 2.15 | 57 | 40.85 |
| Sample 3 | 4.30 | 57 | 38.70 |

The samples were prepared by first blending the MM and the B-PDMS until a homogeneous composition was obtained. Subsequently the blend of MM and B-PDMS was pressed into the glass fabric at a temperature of about 100°C and a pressure of about 50 kN.

It was found that sample 1 failed above impact energies of about 3 J whereas samples 2 and 3 could withstand multiple impacts up to about 8 J albeit with some fibre damage.

Some weeks after the tests, the samples were visually analyzed and it was found that the damage from the impact test had disappeared to a large extent.

## Claims

1. Damage tolerant composite comprising:
- at least one reversible supramolecular polymer,
- fibre reinforcement, and
- nanoparticles having an aspect ratio of at least 10.

2. Composite according to claim 1, having the following composition:
25 to 74 wt.% of the reversible supramolecular polymer,
25 to 70 wt.% of the fibre reinforcement,
1 to 15 wt.% of the said nanoparticles and further conventional additives, preferably
35 to 55 wt.% of the reversible supramolecular polymer,
25 to 60 wt.% of the fibre reinforcement,
2 to 10 wt.% of the said nanoparticles, and
0.2 to 7.5 wt. % of surfactant.

3. Composite according to claim 1 or 2, wherein the reversible supramolecular polymer is selected from the group of metal-hydroxide modified siloxane, preferably polydimethyl siloxane PDMS, such as boric-acid or zinc-hydroxide modified PDMS, reversible metal ligand based supramolecular polymers, and reversible hydrogen bond based supramolecular polymers.

4. Composite according to claim 1-3, wherein the fibre reinforcement is selected from natural and synthetic fibres, more in particular from polyaramides, glass fibres, inorganic fibers, XXXX

5. Composite material according to claim 1-4, wherein the fibre reinforcement is in the form of loose fibres, non-wovens, woven fibres and combinations thereof, including laminates thereof.

6. Composite material according to claim 1-5, wherein the said nano-particles have an aspect ratio of at least 20, preferably between 100 and 2500.

7. Composite material according to claim 1-6, wherein the said nano-particles have been selected form the group of clay materials, nanotubes and nanofibres.

8. Composite material according to claim 7, wherein the clay materials are layer type materials from the group of montmorillonite, beidellite, hectorite and saponite.

9. Composite material according to claim 1-8, wherein the nanoparticles have an organophilic surface or have been treated to make the surface organophilic.

10. Use of a composite material according to claim 1-9, in protective materials for sports or building activities, for personal protection of civil servants, such as police or firemen, and for ballistic protection and armour.

11. Process for the production of a composite material according to claim 1-9, which process comprises mixing the nanoparticles and the reversible supramolecular polymer and subsequently impregnating the fibre reinforcement with the said mixture in a solvent, followed by evaporating the solvent.
